(19) Europäisches Patentamt / European Patent Office / Office européen des brevets

(11) **EP 4 075 346 A1**

(12) **EUROPEAN PATENT APPLICATION**

(43) Date of publication:
**19.10.2022 Bulletin 2022/42**

(21) Application number: **21168898.1**

(22) Date of filing: **16.04.2021**

(51) International Patent Classification (IPC):
**G06N 5/04** *(2006.01)*     **G06N 5/02** *(2006.01)*
**G06N 3/04** *(2006.01)*

(52) Cooperative Patent Classification (CPC):
**G06N 5/022; G06N 3/0454; G06N 5/025;**
**G06N 5/045**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft**
**80333 München (DE)**

(72) Inventors:
• **Grimm, Stephan**
  **81825 München (DE)**
• **Himmelhuber, Anna**
  **93142 Maxhütte-Haidhof (DE)**
• **Joblin, Mitchell**
  **81825 München (DE)**
• **Ringsquandl, Martin**
  **83022 Rosenheim (DE)**
• **Runkler, Thomas**
  **81929 München (DE)**
• **Zillner, Sonja**
  **10437 Berlin (DE)**

(54) **METHOD AND CONTROLLER FOR GENERATING A PREDICTIVE MAINTENANCE ALERT**

(57) The invention relates to a computer-implemented method used for generating a predictive maintenance alert to perform a maintenance action concerning an entity of an industrial system such as a production system represented by a graph stored in a memory, said graph having nodes which represent entities of the industrial system such as components of the production system and having edges representing relations between entities of said industrial system, the method comprising the steps of: processing by a trained graph neural network the input graph to calculate at least one class prediction for selected entities of said industrial system represented by associated nodes; processing the calculated class prediction by a sub-symbolic GNN explainer to identify edges between nodes and associated features of nodes belonging to a sub-graph within the stored graph having influenced significantly the calculated class prediction; learning automatically logic class expressions belonging to explainer classes by running an inductive logic programming, ILP, algorithm using the at least one calculated class prediction as a target predicate on the basis of nodes, edges and features modelled as instances in a domain knowledge ontology of the technical domain of said industrial system and on the basis of nodes, edges and features of the stored graph and/or the sub-graph; and generating the predictive maintenance alert if the calculated class prediction belongs to a predefined maintenance relevant class, wherein the predictive maintenance alert is output via an interface along with at least one maintenance justification derived from the domain knowledge ontology on the basis of the associated learned logic class expressions to increase efficiency of the maintenance process and consequently efficiency of the monitored industrial system.

## FIG 1

**Description**

The invention relates to a computer-implemented method and a controller used for generating a predictive maintenance alert to perform a maintenance action concerning an entity of an industrial system such as a production system.

An industrial system can comprise a plurality of technical entities which relate to each other. These entities can comprise components or equipment of the industrial system. The industrial system can be represented by a graph comprising nodes representing entities of the industrial system and edges representing relations between the entities of the respective industrial system.

A graph neural network GNN is a type of neural network which directly operates on the graph structure of a graph. Graph neural networks GNNs are connectionist models that can capture a dependence of these graphs via so-called message passing between the nodes of the graphs. Unlike conventional neural networks, graph neural networks GNNs retain a state that can represent information from a node's neighborhood with arbitrary depth and can also incorporate node feature information. Graph neural networks can be used among industrial applications or systems for predictive maintenance. Graph neural networks can be used to predict machine failures in a factory monitoring setting. Graph neural networks can be implemented to predict machine failures to trigger maintenance actions thus increasing the production efficiency of the factory. However, the use of a graph neural network for predictive maintenance has the disadvantage that for a user such as an operator of the factory it is hardly possible to comprehend what did contribute to a particular prediction output by the graph neural network GNN. Accordingly, a variety of explainable models for graph neural networks GNNs have been developed. These explainable models include surrogate models which form interpretable models that are trained to approximate the predictions of the graph neural network GNN. Other conventional approaches include the identification of most relevant features. These comprise comprehensible systems which usually do emit symbols, e.g. visualizations along with the output. Therefore, conventional approaches for explainable GNN models do produce explanations that are hard to understand for a user in lack of context and explicit causality. All these conventional systems have in common that a user is responsible for compiling a comprehending the symbols in a final step relying on his or her own implicit form of knowledge and reasoning about them which often are not sufficient, in particular if the user is not a domain expert and because of a personal bias of the user.

Accordingly, it is an object of the present invention to provide a computer-implemented method for generating a predictive maintenance alert to perform a maintenance action which overcomes inefficiencies of a conventional predictive maintenance system.

This object is achieved according to a first aspect of the present invention by a computer-implemented method comprising the features of claim 1.

The invention provides according to a first aspect a computer-implemented method used for generating a predictive maintenance alert to perform a maintenance action concerning an entity of an industrial system represented by a graph stored in a memory, said graph having nodes which represent entities of the industrial system and having edges representing relations between entities of said industrial system, wherein the method comprises the steps of:

> processing by a trained graph neural network the input graph to calculate at least one class prediction for selected entities of said industrial system represented by associated nodes,
> processing the calculated class prediction by a sub-symbolic GNN explainer to identify edges between nodes and associated features of nodes belonging to a sub-graph within the stored graph having influenced significantly the calculated class prediction,
> learning automatically logic class expressions belonging to explainer classes by running an inductive logic programming, ILP, algorithm using the at least one calculated class prediction as a target predicate on the basis of nodes, edges and features modelled as instances in a domain knowledge ontology of the technical domain of said industrial system and on the basis of nodes, edges and features of the input graph and/or the sub-graph, and
> generating the predictive maintenance alert if the calculated class prediction belongs to a predefined maintenance relevant class,
> wherein the predictive maintenance alert is output along with at least one maintenance justification derived from the domain knowledge ontology on the basis of the associated learned logic class expressions.

The computer-implemented method according to the first aspect of the present invention does overcome inefficiencies of conventional predictive maintenance methods by providing explainable predictive maintenance alerts and combining sub-symbolic GNN explainers with semantic web technologies.

In a possible embodiment of the computer-implemented method according to the first aspect of the present invention, the graph neural network receives as input a feature vector for every node of the stored graph representing the industrial system summarized in a feature matrix and a representative description of the link structure of the stored graph in the form of an adjacency matrix.

In a further possible embodiment of the computer-implemented method according to the first aspect of the present invention, the sub-symbolic GNN explainer outputs a binary edge mask which masks out unimportant edges of the input graph and a binary node feature mask which masks out unimportant features of nodes within the input graph.

In a further possible embodiment of the computer-implemented method according to the first aspect of the present invention, the explainer classes comprise an input-output (10) explainer class including logic class expressions explaining the input-output behavior of the graph neural network for a certain class and an importance (I) explainer class including logic class expressions explaining the inner working behavior of the graph neural network.

In a further possible embodiment of the computer-implemented method according to the first aspect of the present invention, the domain knowledge ontology is encoded and fed as additional input into the graph neural network.

In a still further possible embodiment of the computer-implemented method according to the first aspect of the present invention, the inductively learned logic class expressions provided by the inductive logic programming, ILP, algorithm comprise model-level explanations which capture the global behavior of the graph neural network providing information about what input patterns lead to a specific class prediction and instance-level explanations which provide information about an individual class prediction.

In a further possible embodiment of the computer-implemented method according to the first aspect of the present invention, the generated predictive maintenance alert is output along with the logic class expressions including model-level explanations and/or instance-level explanations by means of a user interface.

In a further possible embodiment of the computer-implemented method according to the first aspect of the present invention, the inductive logic programming, ILP, algorithm used for learning the logic class expressions comprises a CELOE (Class Expression Learning for Ontology Engineering) algorithm or an OCEL algorithm.

In a further possible embodiment of the computer-implemented method according to the first aspect of the present invention, the calculated class prediction and the learned logic class expressions are evaluated to trigger automatically a retraining of the graph neural network.

In a further possible embodiment of the computer-implemented method according to the first aspect of the present invention, for each logic class expression a fidelity is calculated and output via a user interface along with the maintenance justification.

In a further possible embodiment of the computer-implemented method according to the first aspect of the present invention, the learned logic class expressions comprise an OWL Manchester Syntax.

In a further possible embodiment of the computer-implemented method according to the first aspect of the present invention, the domain knowledge ontology comprises a description logic, DL, based ontology written in a W3C OWL standard.

In a further possible embodiment of the computer-implemented method according to the first aspect of the present invention, the graph neural network comprises a Graph Convolutional Network.

In a further possible embodiment of the computer-implemented method according to the first aspect of the present invention, the graph neural network comprises a Graph Attention Network.

In a still further possible embodiment of the computer-implemented method according to the first aspect of the present invention, the graph neural network comprises a Gated Graph Neural Network (GGNN).

The invention further provides according to a further aspect a controller of an industrial system comprising the features of claim 14.

The invention provides according to the second aspect a controller of an industrial system adapted to execute the computer-implemented method according to the first aspect of the present invention to generate a predictive maintenance alert adapted to trigger automatically a maintenance action at an entity of the industrial system.

In a possible embodiment of the controller according to the second aspect of the present invention, the controller is connected to a local or remote user interface adapted to output the predictive maintenance alert along with at least one maintenance justification with an associated calculated fidelity.

In the following, possible embodiments of the different aspects of the present invention are described in more detail with reference to the enclosed figures.

Fig. 1 shows a flowchart of a possible exemplary embodiment of a computer-implemented method used for generating a predictive maintenance alert according to the first aspect of the present invention;

Fig. 2 shows a schematic diagram of an overall framework for illustrating a possible embodiment of the computer-implemented method according to the present invention;

Fig. 3 shows an exemplary graph for illustrating the operation of a computer-implemented method and controller according to the present invention;

Fig. 4    illustrates a model-level explanation generation performed by a computer-implemented method according to the present invention;

Fig. 5    illustrates an instance-level explanation generation performed by a computer-implemented method according to the present invention.

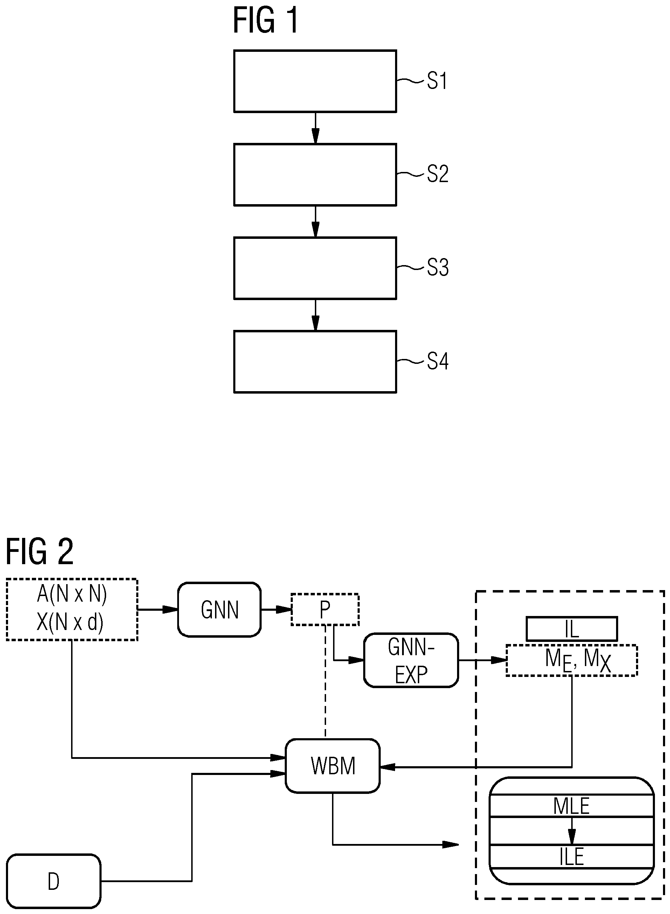

As can be seen from the flowchart of Fig. 1, the computer-implemented method according to the first aspect of the present invention can comprise several main steps. The computer-implemented method illustrated in Fig. 1 is used for generating a predictive maintenance alert PMA to perform a maintenance action concerning an entity of an industrial system SYS. The industrial system SYS is represented by a graph G which can be stored in a data memory. The graph G has nodes V which represent entities of the industrial system SYS and has edges E representing relations between entities of such an industrial system SYS. The industrial system SYS can be for instance a production system comprising several machines in a production facility.

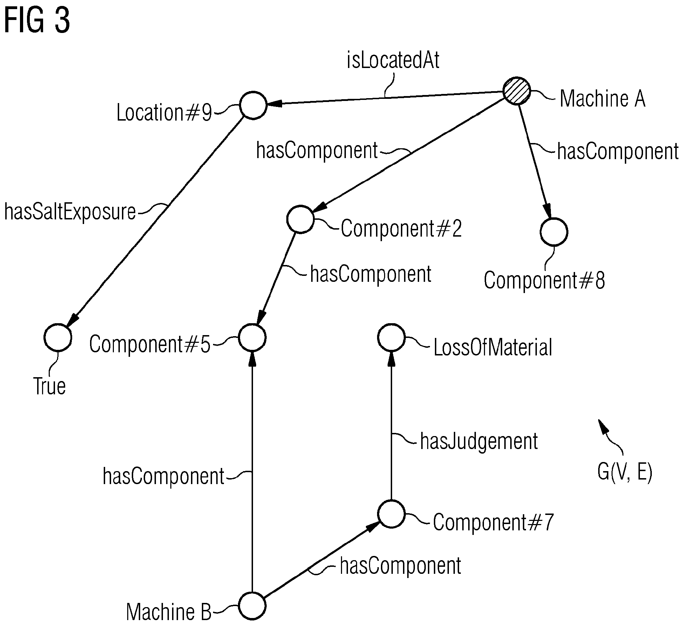

Fig. 3 illustrates an exemplary graph G having nodes V which represent entities of an industrial system SYS and having edges E representing relations between these entities.

As shown in the flowchart of Fig. 1, in a first step S1, an input graph G is processed by a trained graph neural network GNN to calculate at least one class prediction P for selected entities of said industrial system SYS represented by associated nodes V of the graph G. The input graph G processed in step S1 can be read from a data memory. The memory can comprise a local data memory or a remote database.

In a further step S2, the calculated class prediction P is processed by a sub-symbolic GNN explainer to identify edges E between nodes V and associated features X of nodes V belonging to a sub-graph SG within the input graph G having influenced significantly the calculated class prediction P. In a possible embodiment, the sub-symbolic GNN explainer used in step S2 can be the one as described in Ying, Z., Bourgeois, D., You, J., Zitnik, M., Leskovec, J.: Gnnexplainer: Generating explanations for graph neural networks. In: Advances in neural information processing systems, pp. 9244-9255 (2019). The method according to the present invention can also work with other explainer subgraph generation methods. A reason to use sub-symbolic methods (e.g. GNNs) over symbolic methods for classification is the usually higher achieved accuracy and scalability. Additionally, a reasonable high accuracy is a prerequisite for learning meaningful explanations.

In a further step S3, logic class expressions CE belonging to different explainer classes 10, I are learned automatically by running an inductive logic programming, ILP, algorithm using the at least one calculated class prediction P as a target predicate on the basis of nodes V, edges E and features X modelled as instances in a domain knowledge ontology of the technical domain of the industrial system SYS and on the basis of nodes V, edges E and features X of the input graph G and/or the derived sub-graph SG. The inductive logic programming, ILP, algorithm used for learning the logic class expression CE can comprise a CELOE (Class Expression Learning for Ontology Engineering) algorithm. In an alternative implementation, the inductive logic programming, ILP, algorithm can also comprise an OCEL algorithm.

In a further step S4, the predictive maintenance alert PMA is generated if the calculated class prediction P belongs to a predefined maintenance relevant class, wherein the predictive maintenance alert PMA is output along with at least one maintenance justification derived from the domain knowledge ontology on the basis of the associated learned logic class expressions CE.

Fig. 2 illustrates schematically an overall framework used for the computer-implemented method according to the first aspect of the present invention. The overall framework comprises a graph neural network GNN as shown in Fig. 2. The graph neural network GNN receives as an input a feature vector for every node V of the input graph G summarized in a feature matrix X and a representative description of the input graph G in the form of an adjacency matrix A. The graph G represents an industrial system SYS having entities such as equipment and components of the industrial system SYS. The graph neural network GNN is trained in a training process, in particular in a supervised learning training process. The graph neural network GNN can operate directly on the graph structure of the input graph G. The graph neural network GNN can be used to perform a classification task. For instance, every node V in the graph G can be associated with the label and the graph neural network GNN can be used to label the nodes V without ground truth. The graph neural network GNN can comprise several layers. A layer update of the graph neural network GNN involves typically three key computations. In a first computation, the GNN computes neural messages between every pair of nodes V. In a second computation, the graph neural network GNN aggregates messages from neighboring nodes and calculates an aggregated message. Finally, the graph neural network GNN takes in a third key computation the aggregated message along nodes representation from the previous layer and transforms it non-linearly to obtain nodes representations at the next layer. The computations are performed at every layer of the graph neural network GNN. To predict a label of a node V, one can pass the node embeddings through a standard classification network such as a multilayer perceptron MLP with a Softmax output layer.

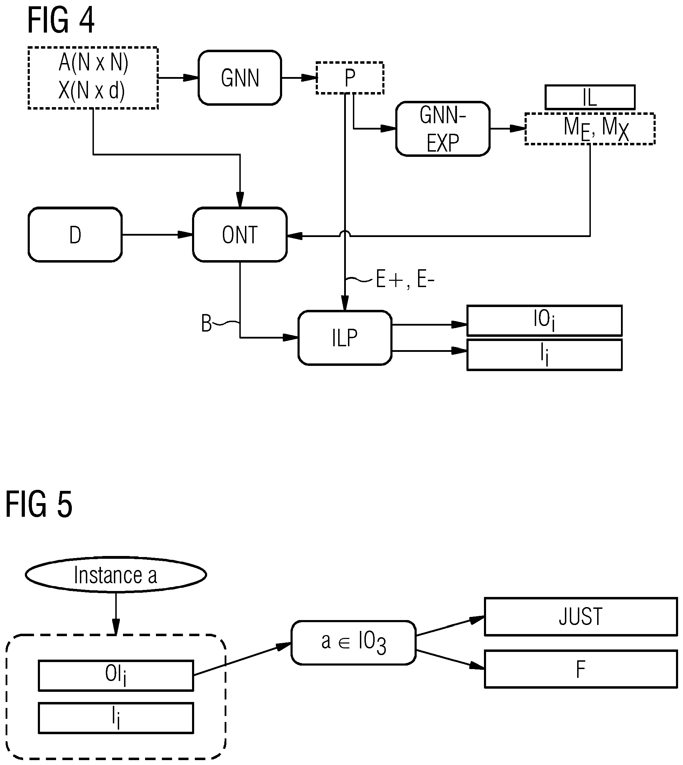

The graph neural network GNN provides a GNN decision formed by a calculated class prediction P. The output P of the graph neural network GNN can comprise predictive class labels. The output of the graph neural network GNN is supplied to a sub-symbolic explainer as illustrated in Fig. 2. The sub-symbolic explainer takes a trained GNN and its predictions and it returns an explanation in the form of a small sub-graph SG of the input graph G together with a small subset of node features that are most influential for the prediction P. For their selection, the mutual information between the prediction P of the GNN and the distribution of possible sub-graph SG structures can be maximized. The output of the sub-symbolic explainer can comprise an edge mask $M_E$ and a node feature mask $M_X$. These form binary masks and identify the most influential information in the receptive field of the graph neural network GNN. The sub-symbolic GNN explainer outputs a binary edge mask $M_E$ which does mask out unimportant edges of the input graph G. The sub-symbolic GNN explainer can further output an binary node failure mask $M_X$ which masks out unimportant features of nodes within the input graph G. The GNN explainer illustrated in Fig. 2 can comprise a computer-implemented software tool for explaining predictions made by the graph neural network GNN. Given the trained GNN model with an instance as its input, the GNN explainer does produce an explanation of the GNN prediction P via a compact sub-graph structure as well as a set of feature dimensions important for its prediction P. The GNN explainer can specify an explanation as a rich sub-graph SG of the entire input graph G the GNN was trained on such that the sub-graph SG maximizes the mutual information with the predictions P of the graph neural network GNN. This can be achieved in a possible implementation by formulating a mean field variational approximation and by learning a real valued graph mask which selects the important sub-graph SG of the GNN's computation graph. Simultaneously, the GNN explainer can also learn a feature mask $M_X$ that masks out unimportant node features. Given an instance, the GNN explainer can identify a compact sub-graph structure and a small subset of node features that play a crucial role in the GNN's prediction P. Further, the GNN explainer can generate consistent and concise explanations for an entire class of instances. The output of the GNN explainer is supplied to a White-Box model WBM as illustrated schematically in Fig. 2. This White-Box model WBM can comprise in a possible embodiment an inductive logic programming, ILP, algorithm as also illustrated in Fig. 4 as enclosed. The White-Box model WBM as shown in Fig. 2 receives the class prediction P calculated by the trained graph neural network GNN as a target predicate.

Initialy, the graph neural network GNN is trained on and applied to training and testing data and subsequently the sub-symbolic explainer method GNNExplainer is applied to the generated predictions, as can be seen in in Figures 2, 4. Subsequently, to create explainer classes EC for the GNN decision making process, a DL-Learner is applied with the respective predicted class P as the target predicate. The background knowledge used by the DL-Learner to learn class expressions CE is comprised of the data building blocks adjacency matrices Ai and node feature matrices Xi, edge masks MEi and node feature masks MXi - which are a subset of Ai and Xi - and the domain knowledge D. As the DL-Learner can only process ontologies, the data is modelled in the ontology ONT.

In a possible embodiment the domain terminology mapping, structure extraction and ontology modelling is carried out as follows:

Edges and features from Ai and Xi are modelled as instances in the ontology ONT, with their relational structure kept intact. The size of the extracted graph, and therefore Ai, is dependent on the number of layers used by the GNN. In order to arrive at user-friendly explainer classes EC, domain terminology mapping DTM based on D is carried out. If there are graph-specific features such as certain motifs typical in the respective domain, this information is extracted from the graph G and modelled in the ontology ONT. This information is used to learn class expressions CE that represent the input-output behavior of a GNN for a certain class.

In order to incorporate the importance masks from the GNNExplainer into the ontology ONT, one can repeat the previous step, but only with edges and node features from MEi and MXi, having been identified as important by the sub-symbolic explainer method modelled in the ontology ONT.

The framework shown in Fig. 2 further uses a domain knowledge D which can be stored in a database. This domain knowledge D comprises for instance hierarchical or structural information and domain terminology of the technical domain of the respective investigated industrial system SYS. This information or data forms background knowledge required by the inductive logic programming, ILP, algorithm to derive explainer classes. In a possible embodiment, the domain knowledge D is stored as a domain knowledge ontology ONT based on a formal representation. The ontology ONT can for example comprise the mechanical information regarding production machines of a production facility of the investigated industrial system SYS. In a possible embodiment, for improving the meaningfulness of explanations, the domain knowledge D can additionally be encoded and fed as additional input into the graph neural network GNN. In a possible implementation, the knowledge ontology ONT can be encoded as a binary feature vector or by hot embedding. The domain knowledge ontology ONT can comprise in a possible embodiment a description logic, DL, based ontology written in a W3C OWL standard.

Description Logics (DL) based ontologies written in the W3C OWL 2 standard are used for the symbolic part of the explainer method.

Let C be a finite set of atomic classes, R be a finite set of roles, and N be a finite set of individuals. Then class expressions are defined recursively using the following grammar, where B denotes atomic classes from A and r denotes roles from R.

The class expressions C and D that function as explanations can be composed with the following constructs:

$$C, D ::= B \mid \neg C \mid C \sqcap D \mid C \sqcup D \mid \forall r.C \mid \exists r.C$$

The ontology O is composed of a TBox and an ABox. The TBox is a set of statements, called (general class inclusion) axioms, of the form $C \sqsubseteq D$, where C and D are class expressions - the symbol $\sqsubseteq$ can be understood as a type of subset inclusion. An ABox is a set of statements of the forms B(a) or r(a,b), where a and b are individuals.

Inductive Logic Programming ILP: Given an ontology O and two sets of individuals from O being called positive respectively negative examples E attempts to construct class expressions CE such that all the positive examples E+ are contained in each of the class expressions CE, while none of the negative examples E- are. The predicate P pertains to the concept or class to be learnt (called target predicate). More formally, for a the given background knowledge D, positive examples E', negative examples E' are processed to find or extract a hypothesis P such that from the hypothesis P together with D the positive examples E+ follow and the negative examples E-do not follow. More concretely, a DL-Learner can be used as a tool to arrive at the explanations, which are given in a possible embodiment in Manchester OWL Syntax.

The inductive logic programming, ILP, algorithm of the White-Box model WBM illustrated in Fig. 2 can be used for learning automatically OWL logic class expressions CE belonging to one or more explainer classes EC. The inductive logic programming, ILP, algorithm can be executed or run on a processor of the overall framework. The inductive logic programming, ILP, algorithm can use the at least one calculated class prediction P output by the graph neural network GNN as a target predicate on the basis of nodes V, edges E and features X modelled as instances in the domain knowledge ontology ONT and on the basis of nodes V, edges E and features X of the input graph G and/or on the basis of nodes V, edges E and features X of the sub-graph SG provided by the GNN explainer. The inductive logic programming, ILP, algorithm can comprise in a possible embodiment a CELOE (Class Expression Learning for Ontology Engineering) algorithm.

The ILP algorithm is used to derive explainer classes EC. In a possible embodiment, the explainer classes EC can comprise an input-output (10) explainer class and an importance (I) explainer class.

The input-output (10) explainer class includes in a possible embodiment logic class expressions CE explaining, i.e. representing, the input-output behavior of the graph neural network GNN for a certain class.

The importance (I) explainer class can include logic class expressions CE explaining, i.e. representing, the inner working behavior of the respective graph neural network GNN used by the overall framework.

Given a background knowledge B, a set of positive learning examples E+ and a set of negative examples E-, the inductive logic programming, ILP, algorithm can induce a simple target relation (hypothesis) H which covers all positive learning examples E+ and no negative examples E-. The learning examples E can be presented as a set of facts. The ILP algorithm works with a set of positive examples E+ and a set of negative examples E- such that the two sets are disjoint. The examples can be formed for instance by first-order clauses. The ILP algorithm can construct a first-order clause called the hypothesis that explains the examples E in the presence of the background knowledge B. That is, if the hypothesis and background knowledge B entails example e, this must hold for all or as many as possible examples $e \in E+$ (set of positive examples) and for no (or as few as possible) examples $e \in E-$(set of negative examples). As also illustrated in Fig. 4, the ILP algorithm can process the original input graph G, the background knowledge B represented by the domain knowledge ontology ONT and the predicate P output by the graph neural network GNN to learn logic class expressions CE of the input-output (10) explainer class. Further, the inductive logic programming, ILP, algorithm can process the sub-graph SG generated by the GNN explainer, the background knowledge B and the predicate P (i.e. the class prediction output by the graph neural network GNN) on the basis of the positive and negative instances or examples E+, E- to learn automatically logic class expressions CE belonging to an importance (I) explainer class.

The input-output (10) explainer class includes logic class expressions CE which represent the input-output (10) behavior of the graph neural network GNN for a certain class, e.g. high-failure risk. In contrast, the importance (I) explainer class includes logic class expressions CE that represent the inner working behavior of the graph neural network GNN.

A single explainer class EC may not provide cover for a complete explanation to the original classification decision P. This is natural, since there might be several patterns that lead to a class prediction P, where one pattern might explain some instances, but not others. Therefore in a preferred embodiment a pool of possible explainer classes EC, consisting of IOi and Ii, is used to generate instance-level explanations ILE. Both types of explainer classes EC contribute to the pool of possible instance-level explanations ILE and can be seen as equivalent. However, depending on the use case, one type of explainer EC class can be preferred over the other.

Given the positive set of examples E+ and the negative set of examples E-, the inductive logic programming, ILP, algorithm is used to automatically (i.e. inductively) learn a class expression CE that covers all positive examples belonging to the positive set of examples E+ but no negative example belonging to the set of negative examples E-. The background knowledge B that is used for learning the class expressions CE can be captured by semantic web technologies SWT and more specifically by ontologies describing the respective cyber-physical system. The background knowledge B used by the inductive logic programming, ILP, algorithm to learn the class expressions CE can be comprised of different data building blocks which can be modelled in an ontology. A building block can comprise nodes V, edges E and features X which are modelled as instances in the ontology, e.g. the components of a machine and events related to it. For example, the industrial system SYS can comprise a production system including machines for performing a production process. A failure can be for instance a defect of a machine, a congestion on a conveyor belt or a crack in a device. During the production process, the status of the production facility or plant and equipment can be recorded in regular intervals along with information if a failure does occur. In case a failure occurs all information regarding the failures can be recorded and stored at least temporarily in a data memory. Information at a specific timestamp can also be referred as an event. In the framework according to the present invention as illustrated in Figs. 1, 3, classification tasks or link predictions can be performed. One can for instance detail a machine or apparatus predicted as having a failure risk. The classification task is carried out by the trained graph neural network GNN. The predictions P output by the trained graph neural network GNN can be explained on a model-level basis and on an instance-level basis. The model-level explanation MLE can comprise a candidate explanation that does capture the global operation behavior of the used graph neural network GNN for investigating what input patterns can lead to a specific class prediction P. The model-level explanation MLE can form the base for an additional instance-level explanation ILE. The instance-level explanation ILE provides information about an individual prediction P. The White-Box model WBM illustrated in Fig. 1 is used to generate symbolic explanations. These explanations include model-level explanations MLE and instance-level explanations ILE as shown in Fig. 2.

Nodes V, edges E and features X can be modelled as instances in the ontology, e.g. components or equipment of the machine and recorded events related to the machine. In order to arrive at meaningful class expressions CE, in a preferred embodiment, a domain terminology mapping is carried out. If there are graph-specific features such as certain motifs typical in the respective domain, this information can be extracted from the graph G and modelled in the respective ontology ONT. The necessary information for performing the mapping can be derived from the domain knowledge D.

Further nodes V, edges E and features X can be modelled as instances in the ontology ONT, if it has been identified as important by the sub-symbolic GNN explainer. It is possible to carry out also domain terminology mapping along with the domain-specific structure extraction and modelling. In a further building block, hierarchical, structural and all other available domain knowledge D can be modelled in the used ontology. It can comprise for example mechanical information regarding an affected production machine of the industrial system SYS.

The trained graph neural network GNN can act as a classifier. In a possible embodiment, the inputs supplied to the trained graph neural network GNN, in particular a graph adjacency matrix A and the node feature matrix X illustrated in Figs. 2, 4, can be mapped to the background knowledge base B and according to the GNN's classification, a set of positive examples E+ and a set of negative examples E- can be distinguished. In order to differentiate between explanations that explicate which pattern of information leads to a specific classification and which pattern of information is important for the GNN in classification decision, it is possible in a preferred embodiment to provide two types of explainer classes EC. These explainer classes EC comprise the input-output explainer classes 10 and the importance explainer classes I. The learned class expression CE given by the class expression learner can comprise in a preferred implementation an OWL Manchester Syntax.

The input-output explainer classes 10 has the objective to create class expressions CE that can explain the input-output behavior of the graph neural network GNN for a certain class such as high-failure risk. The positive instances are sub-graphs SG with machines identified as high risk, and the negative instances are all other sub-graphs SG.

Example:

$IO_{1high\_risk}$ = hasJudgment some LossOfMaterial

$IO_{2high\_risk}$ = isLocatedAt some (hasSaltExposure value true) or some (hasSandExposure value true)

$IO_{3high\_risk}$ = hasComponent some Component#1 or hasComponent some Component#6

$IO_{4high\_risk}$ = hasComponent some Component#5

....

The importance explainer classes I has the objective to create class expressions CE that can indicate to a user a pattern which edges E, nodes V and motifs are important for the graph neural network GNN to predict a certain class. The positive instances are all explainer sub-graphs SG with machines identified as high risk, and negative instances include all other sub-graphs SG.

Example:

$I_{1\ high\_risk}$ = *hasComponent some Component#5*

$I_{2\ high\_risk}$ = *isLocatedAt some (hasSaltExposure value true)*

$I_{3\ high\_risk}$ = *hasComponent some Component#8 and hasComponent not Component#9*

....

These class expressions CE represent the inner workings of the graph neural network GNN. The generated class expressions $IO_i$ and $I_i$ function as a model-level explanation MLE on their own can in a further step be used in the instance-level explanation ILE process as also illustrated schematically in Fig. 5.

Instance-level explanations ILE can be created through an entailment and justification processes. Further, an associated fidelity F can be calculated and tested. For all available explainer classes, in particular the input-output explainer classes 10 and the importance explainer classes I, entailment can be checked. If an entailment does hold, the corresponding class can be used as an explanation for the classification of the respective instance, as can be seen in Fig. 5.

Through the modelled domain knowledge and sub-symbolic explainer information provided by the GNN explainer, the framework provides two additional properties.

A first property comprises justification. A justification mechanism can be applied to justify the entailment with modelled domain knowledge and therefore provides a more detailed explanation. The justification reveals explicit causality which can be drawn from the background knowledge B to the user via a user interface. The justification can comprise a list of statements involved in the entailment.

Justifications are a type of explanation for entailments in ontologies. Let O be an ontology and any arbitrary entailment, such that $O = \eta$. Then $\mathcal{J}$ is a justification for $\eta$ in *0* if

$$\mathcal{J} \subseteq 0, \ \mathcal{J} = \eta$$

and for any

$$\mathcal{J}' \subseteq \mathcal{J} \ \mathcal{J}' \ \forall \ \eta.$$

In order to get meaningful justifications for instance-level entailments, the ontology provides rich enough information about a domain with its hierarchies and instances in order to avoid simple tautologies.

Additionally, to checking the class membership of the instance, it is possible to test if the explainer sub-graphs SG entailments do overlap with the original entailments. Based on an overlap ratio, it is possible to compute an associated fidelity F. A fidelity F is a measure or metric of the accuracy of the extracted knowledge in relation of the used graph neural network GNN rather than the data. The fidelity F is a measure of the accuracy of the student model (DL Learner) with respect to the teacher model (GNN). High fidelity F is therefore fundamental whenever a student model is to be claimed to offer a good explanation for a more complex teacher model. Without high fidelity results, an apparently perfectly good explanation produced by an explainable AI system is likely not to be an explanation for the underlying ML system which it is expected to explain. In other words, an explanation that is of poor fidelity F may not be regarded as an an explanation but can be regarded more as misinformation.

Using the masks MEi's or MXi's identified by the GNNExplainer an overlap with the entailment for an instance g is calculated. The denominator equals the number of edges or node features that have to be in the adjacency matrix A or the feature matrix X, for the entailment to hold:

$$S^{IO_i}(g) = \{\{a_k, \quad a_n\} \in A^9 | 0 | = IO_i\,(g)\}$$

For the numerator, one sums up the entailment related respective number of edges or node features, that are part of MEi or MXi.

$$Fidelity(S^{IO_i}, g) = \frac{|S^{IO_i}(g) \cap M_E|}{|S^{IO_i}(g)|}$$

with Ai being interchangeable with Xi, and MEi with MXi, depending on the explainer class EC.

Example:

*Production machine A is classified as "high failure risk" Explanations:*

$A \in IO_2$
*Justification:*

> *A isLocated at Location#9*
> *Location#9 hasSaltExposure value true*
> *$IO_2$ EquivalentTo hasSaltExposure value true*
> *Fidelity: 85%*

$A \in I_3$
*Justification:*

> *A hasComponent Component#8*
> *$I_3$ EquivalentTo hasComponent some Component#8 and*
> *hasComponent not Component#9*
> *Fidelity: 57%*

Fig. 3 shows an exemplary graph G of a production facility having two machines A, B. The machine A is located at location#9 that is exposed to salt. Machine A has as a component component#2 which in turn has as a component component#5. Machine A has as a further component component#8. Component#5 is also a component of a further machine B of the production facility. Machine B has as a further component component#7 which is judged as having loss of material. The graph G illustrated in Fig. 3 can be supplied as input to the graph neutral network GNN to perform a classification task. For example, the production machine A can be classified by the GNN as having "a high-failure risk". In the illustrated example, there are different explanations for this classification. Each explanation comprises an associated classification and an associated calculated fidelity value.
In the first explanation, the classification is that machine A is located at location#9 wherein this location has a salt exposure value true. This explanation has a fidelity value of 85%.
The other explanation for the high-failure risk classification is that machine A includes component#8 and the associated fidelity value is 57% in the illustrated example.
The graph neutral network GNN can be run and updated routinely, whenever new additional data is available. In case that a GNN prediction P warrants a maintenance action, for instance if a production machine is classified as "high-failure risk", a predictive maintenance alert PMA can be output via an interface to a user. This interface can comprise a local interface at the site of the industrial system SYS or a remote interface connected via a data network. The predictive maintenance alert PMA can be generated automatically if the calculated class prediction P does belong to a predefined maintenance relevant clause. The predictive maintenance alert PMA is output via the user interface along with at least one maintenance justification derived from the domain knowledge ontology on the basis of the associated learned logic class expressions CE. Besides the maintenance justification, also an associated calculated fidelity value F can be output via the interface. A user or expert such as an operator of the production plant can analyze the predictive maintenance alert PMA along with the generated logic class expressions CE and along with the maintenance justification and calculated fidelity F. If the analysis indicates that the predictive maintenance alert PMA is required to provide an operative industrial system SYS, a corresponding maintenance action can be automatically triggered and an associated maintenance schedule can be adjusted accordingly. In case that the maintenance justification is found to be insufficient or does contradict the domain knowledge D, the observation can be flagged for further analysis. A contradicting explanation or justification may indicate a possibly wrong classification result of the graph neutral network GNN which can trigger in a possible embodiment automatically a retraining of the graph neural network GNN. Adjustments can be made to further improve the framework or AI system by adding additional background knowledge B, altering the training process and training the graph neutral network GNN and/or by modifying the required data preparation pipelines. The maintenance justifications output via the user interface are helpful to detect biases or flaws in the underlying data or model which potentially can lead to unforeseen failures and unnecessary downtimes of the industrial system SYS.

The computer-implemented method according to the present invention provides rationale for automated decisions and automated predictive maintenance alerts PMA which in turn reduces unnecessary downtimes of the supervised industrial system SYS by predicting required maintenance before the equipment of the industrial system SYS breaks down. Further, the computer-implemented method provides automatically for possible explanations for the maintenance prediction P thus increasing trustworthiness of the system. Further, the computer-implemented method can output fidelity values F which can indicate certain qualities of the output explanations. The explanations along with their maintenance justification and fidelity can improve the transparency and trustworthiness of the maintenance process for maintaining equipment of the industrial system SYS. Possible failures can be identified more accurately and rapidly. In this way, the total efficiency of the industrial system SYS is increased. For example, the production efficiency of a production system is increased by using the predictive maintenance alert PMA system implemented by the computer-implemented method according to the first aspect of the present invention.

The computer-implemented method as illustrated in the flowchart of Fig. 1 can be implemented with a program executed on a processor of a controller of the industrial system SYS. The controller can execute the computer-implemented method to generate automatically a predictive maintenance alert PMA adapted to trigger a maintenance action at a specific entity of the monitored industrial system SYS. The controller can be connected to a local or remote user interface adapted to output the predictive maintenance alert PMA along with at least one maintenance justification and an associated fidelity value. The computer-implemented method according to the present invention can be executed in a possible embodiment in real time during operation of the monitored industrial system SYS such as a production facility. The computer-implemented method can trigger automatically the generation of control signals involved in a maintenance process derived from the predictive maintenance alert PMA. For instance, if an entity of the industrial system SYS is found to have a high-failure risk, the entity can be automatically shut down for inspection or repair. Each entity of the industrial system SYS can be represented by an associated node V within the input graph G. These features can for instance comprise the age of the machine or a type of the machine represented by a node V in the graph G. Other exemplary entities of the industrial system SYS may also comprise sensors forming specific entities of the industrial system. The output of the inductive logic programming, ILP, algorithm, i.e. the inductively learned logic expressions used to derive maintenance justification, can be logged in a possible implementation in a memory for further processing. The computer-implemented method according to the present invention can be used for any kind of industrial system SYS in different technical domains. Depending on the use case, different kinds of graph neutral networks GNNs can be used in the framework illustrated in Fig. 2.

**Claims**

1. A computer-implemented method used for generating a predictive maintenance alert (PMA) to perform a maintenance action concerning an entity of an industrial system (SYS) represented by a graph (G) stored in a memory,
   said graph (G) having nodes (V) which represent entities of the industrial system (SYS) and having edges (E) representing relations between entities of said industrial system (SYS), the method comprising the steps (S) of:

   - processing (S1) by a trained graph neural network (GNN) an input graph (G) to calculate at least one class prediction (P) for selected entities of said industrial system (SYS) represented by associated nodes (V);
   - processing (S2) the calculated class prediction (P) by a sub-symbolic GNN explainer to identify edges (E) between nodes (V) and associated features (X) of nodes (V) belonging to a sub-graph (SG) within the stored graph (G) having influenced significantly the calculated class prediction (P);
   - learning automatically (S3) logic class expressions (CE) belonging to explainer classes (10, I) by running an inductive logic programming, ILP, algorithm using the at least one calculated class prediction (P) as a target predicate on the basis of nodes (V), edges (E) and features (X) modelled as instances in a domain knowledge ontology of the technical domain of said industrial system (SYS) and on the basis of nodes (V), edges (E) and features (X) of the stored graph (G) and/or the sub-graph (SG); and
   - generating (S4) the predictive maintenance alert (PMA) if the calculated class prediction (P) belongs to a predefined maintenance relevant class,

   wherein the predictive maintenance alert (PMA) is output along with at least one maintenance justification derived from the domain knowledge ontology on the basis of the associated learned logic class expressions (CE).

2. The computer-implemented method according to claim 1 wherein the graph neural network (GNN) receives as input a feature vector for every node (V) of the stored graph (G) summarized in a feature matrix (X) and a representative description of the link structure of the stored graph (G) in the form of an adjacency matrix (A).

3. The computer-implemented method according to claim 1 or 2 wherein the sub-symbolic GNN explainer outputs a binary edge mask ($M_E$) which masks out unimportant edges in the input graph (G) and
a binary node feature mask ($M_X$) which masks out unimportant features of nodes within the input graph (G).

4. The computer-implemented method according to any of the preceding claims 1 to 3 wherein the explainer classes comprise
an input-output (10) explainer class including logic class expressions (CE) explaining the input-output behavior of the graph neural network (GNN) for a certain class and
an importance (I) explainer class including logic class expressions (CE) explaining the inner working behavior of the graph neural network (GNN).

5. The computer-implemented method according to any of the preceding claims 1 to 4 wherein the domain knowledge ontology is encoded and fed as additional input into the graph neural network (GNN).

6. The computer-implemented method according to any of the preceding claims 1 to 5 wherein the inductively learned logic class expressions (CE) provided by the inductive logic programming, ILP, algorithm comprise
model-level explanations (MLE) which capture the global behavior of the graph neural network (GNN) providing information about what input patterns lead to a specific class prediction (P); and
instance-level explanations (ILE) which provide information about an individual class prediction (P).

7. The computer-implemented method according to any of the preceding claims 1 to 6 wherein the generated predictive maintenance alert (PMA) is output along with the logic class expressions (CE) including model-level explanations (MLE) and/or instance-level explanations (ILE) by means of a user interface.

8. The computer-implemented method according to any of the preceding claims 1 to 7 wherein the inductive logic programming, ILP, algorithm used for learning the logic class expressions (CE) comprises a CELOE (Class Expression Learning for Ontology Engineering) algorithm or an OCEL algorithm.

9. The computer-implemented method according to any of the preceding claims 1 to 8 wherein the calculated class prediction (P) and the learned logic class expressions (CE) are evaluated to trigger automatically a retraining of the graph neural network (GNN).

10. The computer-implemented method according to any of the preceding claims 1 to 9 wherein for each logic class expression (CE) a fidelity is calculated and output via a user interface along with the maintenance justification.

11. The computer-implemented method according to any of the preceding claims wherein the domain knowledge ontology comprises a description logic, DL, based ontology written in a W3C OWL standard.

12. The computer-implemented method according to any of the preceding claims 1 to 11 wherein the graph neural network (GNN) comprises a Graph Convolutional Network (GCN),
a Graph Attention Network (GAT) or
a Gated Graph Neural Network (GGNN).

13. A computer program product comprising computer readable instructions processed to perform the method according to any of the preceding claims 1 to 12.

14. A controller of an industrial system adapted to execute the computer-implemented method according to any of the preceding claims 1 to 13 to generate a predictive maintenance alert (PMA) adapted to trigger automatically a maintenance action at an entity of the industrial system (SYS).

15. The controller according to claim 14 wherein the controller is connected to a local or remote user interface adapted to output the predictive maintenance alert (PMA) along with at least one maintenance justification and an associated calculated fidelity value (F).

## FIG 1

```
┌─────────────────┐
│                 │ ~S1
│                 │
└─────────────────┘
         │
         ▼
┌─────────────────┐
│                 │ ~S2
│                 │
└─────────────────┘
         │
         ▼
┌─────────────────┐
│                 │ ~S3
│                 │
└─────────────────┘
         │
         ▼
┌─────────────────┐
│                 │ ~S4
│                 │
└─────────────────┘
```

## FIG 2

```
┌─────────────┐
┊ A(N x N)    ┊      ┌───────┐      ┌─────┐
┊ X(N x d)    ┊ ───▶ │  GNN  │ ───▶ ┊  P  ┊
└─────────────┘      └───────┘      └─────┘
      │                                │              ┌────────────┐
      │                                ▼              │    IL      │
      │                           ┌────────┐          ├────────────┤
      │                           │  GNN-  │ ───▶  ┊ M_E, M_X ┊
      │                           │  EXP   │          └────────────┘
      │                           └────────┘                │
      │                                │                     │
      │           ┌────────┐           │                     │
      └─────────▶ │  WBM   │ ◀─────────────────────────────┘
                  └────────┘
         ┌──────▶      │                    ┌────────────┐
         │             │                    │    MLE     │
   ┌─────────┐         │                    ├─────┬──────┤
   │    D    │         └──────────────▶     │     ▼      │
   └─────────┘                              │    ILE     │
                                            └────────────┘
```

# FIG 3

isLocatedAt

Location#9

Machine A

hasComponent

hasComponent

hasSaltExposure

Component#2

Component#8

hasComponent

Component#5

LossOfMaterial

True

hasJudgement

G(V, E)

hasComponent

Component#7

hasComponent

Machine B

## FIG 4

## FIG 5

Europäisches
Patentamt

European
Patent Office

Office européen
des brevets

# EUROPEAN SEARCH REPORT

Application Number

EP 21 16 8898

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WU DEYANG ET AL: "Process topology convolutional network model for chemical process fault diagnosis", PROCESS SAFETY AND ENVIRONMENTAL PROTECTION, INSTITUTION OF CHEMICAL ENGINEERS, RUGBY, GB, vol. 150, 8 April 2021 (2021-04-08), pages 93-109, XP086578251, ISSN: 0957-5820, DOI: 10.1016/J.PSEP.2021.03.052 [retrieved on 2021-04-08] * abstract; Sections 1-4; figures 4-7 * | 1-15 | INV. G06N5/04 G06N5/02 G06N3/04 |
| A,D | REX YING ET AL: "GNN Explainer: A Tool for Post-hoc Explanation of Graph Neural Networks", ARXIV.ORG, CORNELL UNIVERSITY LIBRARY, 201 OLIN LIBRARY CORNELL UNIVERSITY ITHACA, NY 14853, 10 March 2019 (2019-03-10), XP081131533, * abstract; Sections 1 and 3-6; figures 1,2 * | 1-15 | |
| A | ALFONSO ORTEGA ET AL: "Symbolic AI for XAI: Evaluating LFIT Inductive Programming for Fair and Explainable Automatic Recruitment", ARXIV.ORG, CORNELL UNIVERSITY LIBRARY, 201 OLIN LIBRARY CORNELL UNIVERSITY ITHACA, NY 14853, 1 December 2020 (2020-12-01), XP081827370, * abstract; Sections 1-8; figures 1, 2 * | 1-15 | |

TECHNICAL FIELDS SEARCHED (IPC)

G06N

-/--

The present search report has been drawn up for all claims

| Place of search | Date of completion of the search | Examiner |
|---|---|---|
| The Hague | 15 October 2021 | Klasen, TJ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 21 16 8898

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ROBERTO CONFALONIERI ET AL: "An Ontology-based Approach to Explaining Artificial Neural Networks", ARXIV.ORG, CORNELL UNIVERSITY LIBRARY, 201 OLIN LIBRARY CORNELL UNIVERSITY ITHACA, NY 14853, 19 June 2019 (2019-06-19), XP081378215, * abstract; Section 1-7 * | 1-15 | |
| A | JENS LEHMANN ET AL: "Class expression learning for ontology engineering", WEB SEMANTICS: SCIENCE, SERVICES AND AGENTS ON THE WORLD WIDE WEB, ELSEVIER, AMSTERDAM, NL, vol. 9, no. 1, 4 January 2011 (2011-01-04), pages 71-81, XP028141744, ISSN: 1570-8268, DOI: 10.1016/J.WEBSEM.2011.01.001 [retrieved on 2011-01-12] * abstract; Sections 1-8 * | 1-15 | |
| A | JYOTI NARWARIYA ET AL: "Graph Neural Networks for Leveraging Industrial Equipment Structure: An application to Remaining Useful Life Estimation", ARXIV.ORG, CORNELL UNIVERSITY LIBRARY, 201 OLIN LIBRARY CORNELL UNIVERSITY ITHACA, NY 14853, 30 June 2020 (2020-06-30), XP081710599, * abstract; Sections 1 and 3-6; figures 1-3 * | 1-15 | TECHNICAL FIELDS SEARCHED (IPC) |

-/--

The present search report has been drawn up for all claims

| Place of search | Date of completion of the search | Examiner |
|---|---|---|
| The Hague | 15 October 2021 | Klasen, TJ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 075 346 A1**

Europäisches
Patentamt

European
Patent Office

Office européen
des brevets

# EUROPEAN SEARCH REPORT

Application Number

EP 21 16 8898

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Anonymous: "HARD MASKING FOR EXPLAINING GRAPH NEURAL NETWORKS", , 28 September 2020 (2020-09-28), pages 1-21, XP055851047, Retrieved from the Internet: URL:https://openreview.net/pdf?id=uDN8pRAdsoC [retrieved on 2021-10-13] * abstract; Sections 1 and 3-4; figure 1 * ----- | 1-15 | |

TECHNICAL FIELDS
SEARCHED      (IPC)

The present search report has been drawn up for all claims

| Place of search | Date of completion of the search | Examiner |
|---|---|---|
| The Hague | 15 October 2021 | Klasen, TJ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 3 of 3

17

**EP 4 075 346 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YING, Z. ; BOURGEOIS, D. ; YOU, J. ; ZITNIK, M. ; LESKOVEC, J.** Gnnexplainer: Generating explanations for graph neural networks. *Advances in neural information processing systems,* 2019, 9244-9255